# EUROPÄISCHE PATENTANMELDUNG

(11) **EP 3 339 027 A1**
(43) Veröffentlichungstag der Anmeldung: **27.06.2018**
(21) Anmeldenummer: 17191285.0
(22) Anmeldetag: 15.09.2017
(51) Int. Cl.: B32B 37/20, B32B 37/12, B65D 81/00, B32B 15/08

(54) **VERFAHREN ZUR HERSTELLUNG EINER KOMPOSIT-FOLIE ALS VERPACKUNGSMATERIAL FÜR LEBENSMITTEL**

(30) Priorität: 22.12.2016 EP 16206078; 10.05.2017 EP 17170425
(71) Anmelder: Sener, Numan, 88416 Ochsenhausen (DE); Alame, Mohamad, 88400 Biberach (DE); Tauras, Rüdiger, 88400 Biberach (DE)
(72) Erfinder: Sener, Numan, 88416 Ochsenhausen (DE); Alame, Mohamad, 88400 Biberach (DE); Tauras, Rüdiger, 88400 Biberach (DE)
(74) Vertreter: Kiessling, Christian

(57) **Zusammenfassung**

Bei einem Verfahren zum Herstellen einer in der Lebensmittelindustrie einsetzbaren, aus einer Basisfolie (110) und einer Kunststofffolie (120) zusammengesetzten Komposit-Folie (100), wird eine Bereitstellung frei von giftigen Substanzen bei fettresistenter und gut kompaktierbarer Ausführung dadurch erreicht, dass die Basisfolie (110) und die Kunststofffolie (120) im Vorfeld einer Zusammenfügung zu einer Komposit-Folie (100) von getrennten Spulenkörpern (210, 220) abgewickelt und einer Verpresseinrichtung (300) zugeführt werden, in der sie mittels mindestens zweier gegeneinander vorgespannten Rollen (310, 320) unter Einfügung eines Klebematerials und unter Aufbringung eines vorgegebenen Druckes zu einer Komposit-Folie (100) zusammengepresst werden, die im Nachgang auf einen dritten Spulenkörper (230) aufgewickelt wird.

## Beschreibung

Die Erfindung betrifft ein Verfahren zum Herstellen einer aus einer Basisfolie und einer Kunststofffolie zusammengesetzten Komposit-Folie, die im Bereich der Lebensmittelindustrie Einsatz finden kann.

Die Erfindung betrifft insbesondere ein Verfahren zum Herstellen einer Komposit-Folie zur Bereitstellung eines Verpackungsmaterials für erwärmte Lebensmittel wie insbesondere Fastfood.

Komposit-Folien der eingangs genannten Art werden im Stand der Technik zur Verpackung unterschiedlichster Gegenstände verwendet. Die bekannten Komposit-Folien weisen indes zum einen den Nachteil auf, dass sie für eine Verwendung im Bereich der Lebensmittel aufgrund des Inhalts und der Abgabe giftiger chemischer Substanzen nicht geeignet sind.

Dies trifft insbesondere auf Komposit-Folien zu, bei deren Herstellung Lösungsmittel zum Einsatz kommen.

Die bekannten Komposit-Folien weisen zum anderen den Nachteil auf, dass sie in Struktur und Konsistenz für eine Verpackung von Lebensmitteln, insbesondere von in der Regel fettem und warm zubereitetem Fastfood nicht geeignet sind, beispielsweise, weil sie nicht fettresistent sind und insofern Fett aus dem Fastfood aufnehmen und selbst fettig werden, oder aber, weil sie schlecht kompaktierbar sind und daher nicht wie gewünscht für eine kompakte, wärmekonservierend enge Umhüllung des Fastfoods geeignet sind.

Darüber hinaus weisen viele Komposit-Folien den Nachteil auf, dass eine Identifizierung des genauen Inhalts eines verpackten Gegenstandes wegen optischer Abschirmung des verpackten Gegenstandes nicht möglich ist und diese Folien daher für eine Beschriftung nicht oder nur wenig geeignet sind. Dieses Problem tritt bei Lebensmitteln insbesondere bei Fastfood-Produkten wie beispielsweise Döner auf, da diese häufig nach Kundenwünschen mit verschiedensten Zutaten versehen individualisiert zubereitet werden, wobei eine a posteriori Identifizierung eines verpackten individualisierten Produktes durch Augenschein nicht mehr möglich ist.

Aufgabe der Erfindung ist es deshalb, ein Verfahren zur Herstellung von Komposit-Folien zu schaffen, die frei von giftigen Substanzen sind, fettresistent und gut kompaktierbar sind und mit deren Hilfe eine Identifizierung eines verpackten individualisierten Produktes wie beispielsweise eines Hamburgers allein durch Augenschein ermöglicht ist.

Für ein Verfahren zur Herstellung einer Komposit-Folie der eingangs genannten Art wird diese Aufgabe erfindungsgemäß dadurch gelöst, dass die Basisfolie und die Kunststofffolie im Vorfeld einer Zusammenfügung zu einer Komposit-Folie von getrennten Spulenkörpern abgewickelt und einer Verpresseinrichtung zugeführt werden, in der sie mittels mindestens zweier gegeneinander vorgespannten Rollen unter Einfügung eines Klebematerials und unter Aufbringung eines vorgegebenen Druckes zu einer Komposit-Folie zusammengepresst werden, die im Nachgang auf einen dritten Spulenkörper aufgewickelt wird.

Bevorzugte Ausführungsformen der Erfindung sind Gegenstand der Unteransprüche der jeweiligen unabhängigen Patentansprüche, deren Elemente im Sinne einer weiteren Verbesserung des Lösungsansatzes der der Erfindung zugrunde gelegten Aufgabe wirken.

Bei dem erfindungsgemäßen Verfahren zur Herstellung einer Komposit-Folie wird mit Hilfe der Merkmalskombination, dass die Basisfolie und die Kunststofffolie im Vorfeld einer Zusammenfügung zu einer Komposit-Folie von getrennten Spulenkörpern abgewickelt und einer Verpresseinrichtung zugeführt werden, in der sie mittels mindestens zweier gegeneinander vorgespannten Rollen unter Einfügung eines Klebematerials und unter Aufbringung eines vorgegebenen Druckes zu einer Komposit-Folie zusammengepresst werden, die im Nachgang auf einen dritten Spulenkörper aufgewickelt wird, im Ergebnis eine Komposit-Folie erzeugt, die frei von giftigen Substanzen ist und dabei fettresistent und gut kompaktierbar ist, wobei auch die Möglichkeit einer eindeutigen Identifizierbarkeit des von der Komposit-Folie verpackten Lebensmittels durch Aufbringung entsprechender Kennzeichnungen im Bereich der Außenfläche der grafisch deutlich besser als die Basisfolie gestaltbaren Kunststofffolie gegeben ist.

Gemäß einer ersten bevorzugten Ausführungsform des erfindungsgemäßen Verfahrens zur Herstellung einer Komposit-Folie ist eine Mischeinrichtung vorgesehen, um das aus einem Kleber und einem Härter zusammengesetzte Klebematerial zu mischen, wobei sowohl der Kleber als auch der Härter in Form von miteinander in vorgegebenem Verhältnis zu mischenden Kunstharzteilchen vorliegen, die mittels jeweiliger Dosiereinrichtungen entsprechend dem vorgegebenem Mischungsverhältnis dosiert werden.

Des Weiteren ist gemäß bevorzugter Ausführungsform eine Heizeinrichtung vorgesehen, um die Kunstharzteilchen durch Erhitzen zum Schmelzen zu bringen, wobei im Nachgang dazu die Schmelze der Kunstharzteilchen mittels einer Einbringeinrichtung zwischen Basisfolie und Kunststofffolie eingebracht wird und Basisfolie und Kunststofffolie im Nachgang dazu mittels einer Verpresseinrichtung lösungsmittelfrei miteinander verpresst werden.

Ein Erhitzen der Kunstharzteilchen erfolgt vorzugsweise mittels einer UV-Bestrahlungseinheit, die eingestellt ist, um die Kunstharzteilchen auf eine Temperatur im Bereich von 50°C bis 90°C, insbesondere auf eine Temperatur von etwa 70°C zu erhitzen.

Gemäß einer weiteren bevorzugten Ausführungsform des erfindungsgemäßen Verfahrens zur Herstellung einer Komposit-Folie durchläuft die Basisfolie im Vorfeld eines Eingangs in die Verpresseinrichtung eine UV-Bestrahlungseinheit zum Zweck einer Erwärmung, wobei jeweils vor und hinter der UV-Bestrahlungseinheit der Basisfolie vorzugsweise elastisch vorgespannte Spannrollen vorgesehen sind, um eine gleichmäßige Führung der Basisfolie sicherzustellen.

Auch die Kunststofffolie durchläuft im Vorfeld eines Eingangs in die Verpresseinrichtung vorzugsweise eine UV-Bestrahlungseinheit zum Zweck einer Erwärmung, wobei auch hier vorzugsweise jeweils vor und hinter der UV-Bestrahlungseinheit der Kunststofffolie elastisch vorgespannte Spannrollen vorgesehen sind, um eine gleichmäßige Führung der Kunststofffolie sicherzustellen.

Gemäß einer wichtigen bevorzugten Ausführungsform des erfindungsgemäßen Verfahrens zur Herstellung einer Komposit-Folie werden die Basisfolie und/oder die Kunststofffolie im Nachgang einer Zusammenpressung zu einer Komposit-Folie mittels auf ihre jeweilige Oberfläche ausgerichteter UV-Bestrahlungseinheiten auf eine vorgegebene Temperatur erhitzt, um eine irreversible UV-Licht-induzierte Aushärtung der geschmolzenen Kunstharzteilchen zu bewirken.

Jeweils vor und hinter den UV-Bestrahlungseinheiten der Komposit-Folie sind vorzugsweise wiederum elastisch vorgespannte Spannrollen vorgesehen, um eine gleichmäßige Führung der Komposit-Folie sicherzustellen.

Gemäß weiterer bevorzugter Ausführungsformen des erfindungsgemäßen Verfahrens zur Herstellung einer Komposit-Folie wird als Basisfolie insbesondere eine Aluminiumfolie herangezogen, die eine Dicke im Bereich von 0,001 mm bis 0,02 mm, vorzugsweise im Bereich von 0,003 mm bis 0,016 mm und insbesondere eine Dicke von etwa 0,01 mm aufzuweisen hat.

Als Kunststofffolie werden vorzugsweise Folien aus nicht fettlöslichem, bis etwa 90°C wärmeresistentem Kunststoffmaterial wie beispielsweise Polyethylen-Terephthalat (PET) herangezogen, die vorzugsweise in einer Dicke im Bereich von 0,001 mm bis 0,02 mm, weiter vorzugsweise im Bereich von 0,003 mm bis 0,012 mm und insbesondere in einer Dicke von etwa 0,005 mm vorliegen.

Die erfindungsgemäße Komposit-Folie sowie das Verfahren zu deren Herstellung werden im Folgenden anhand einer bevorzugten Ausführungsform erläutert, die in der Figur der Zeichnung dargestellt ist. Darin zeigt:

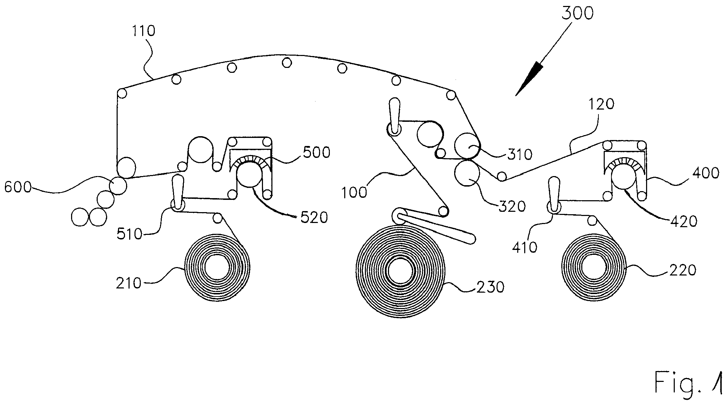

- Fig.1: eine bevorzugte Ausführungsform des erfindungsgemäßen Verfahrens zur Herstellung einer Komposit-Folie in einer schematischen Darstellung.

Das in Figur 1 dargestellte erfindungsgemäße Verfahren ist zur Herstellung einer im Bereich der Lebensmittelindustrie einsetzbaren, aus einer Basisfolie 110 und einer Kunststofffolie 120 zusammengesetzten Komposit-Folie 100 geeignet, wobei die Basisfolie 110 und die Kunststofffolie 120 im Vorfeld einer Zusammenfügung zu einer Komposit-Folie 100 von getrennten Spulenkörpern 210, 220 abgewickelt und einer Verpresseinrichtung 300 zugeführt werden.

In der Verpresseinrichtung 300 werden die Basisfolie 110 und die Kunststofffolie 120 mittels zweier gegeneinander vorgespannten Rollen 310, 320 unter Einfügung eines Klebematerials und unter Aufbringung eines vorgegebenen Druckes zu einer Komposit-Folie 100 zusammengepresst, wobei die so entstandene Komposit-Folie 100 im Nachgang auf einen dritten Spulenkörper 230 aufgewickelt wird.

Eine in der Darstellung nicht gezeigte Mischeinrichtung ist vorgesehen, um das aus einem Kleber und einem Härter zusammengesetzte Klebematerial zu mischen, wobei sowohl der Kleber als auch der Härter in Form von miteinander in vorgegebenem Verhältnis zu mischenden Kunstharzteilchen vorliegen, die mittels jeweiliger Dosiereinrichtungen entsprechend dem vorgegebenem Mischungsverhältnis dosiert werden.

Des Weiteren ist eine in der Darstellung ebenfalls nicht gezeigte Heizeinrichtung vorgesehen, um die Kunstharzteilchen durch Erhitzen zum Schmelzen zu bringen, wobei im Nachgang dazu die Schmelze der Kunstharzteilchen mittels einer Einbringeinrichtung zwischen Basisfolie 110 und Kunststofffolie 120 eingebracht wird und Basisfolie 110 und Kunststofffolie 120 im Nachgang dazu mittels einer Verpresseinrichtung 300 lösungsmittelfrei miteinander verpresst werden.

Ein Erhitzen der Kunstharzteilchen erfolgt mittels einer UV-Bestrahlungseinheit, die eingestellt ist, um die Kunstharzteilchen auf eine Temperatur von etwa 70°C zu erhitzen.

Die Basisfolie 110 durchläuft im Vorfeld eines Eingangs in die Verpresseinrichtung 300 eine UV-Bestrahlungseinheit 500 zwecks Erwärmung, wobei jeweils vor und hinter der UV-Bestrahlungseinheit 500 der Basisfolie 110 elastisch vorgespannte Spannrollen 510, 520 vorgesehen sind, um eine gleichmäßige Führung der Basisfolie 110 sicherzustellen.

Auch die Kunststofffolie 120 durchläuft im Vorfeld eines Eingangs in die Verpresseinrichtung 300 eine UV-Bestrahlungseinheit 400 zwecks Erwärmung, wobei jeweils vor und hinter der UV-Bestrahlungseinheit 400 der Kunststofffolie 120 elastisch vorgespannte Spannrollen 410, 420 vorgesehen sind, um eine gleichmäßige Führung der Kunststofffolie 120 sicherzustellen.

Die Kunststofffolie 120 wird im Nachgang einer Zusammenpressung zu einer Komposit-Folie 100 mittels einer in der Darstellung nicht gezeigten, auf ihre frei liegende Oberfläche ausgerichtete UV-Bestrahlungseinheit auf eine vorgegebene Temperatur erhitzt, um eine irreversible UV-Licht-induzierte Aushärtung der geschmolzenen Kunstharzteilchen zu bewirken.

Jeweils vor und hinter den UV-Bestrahlungseinheiten der Komposit-Folie 100 sind elastisch vorgespannte Spannrollen vorgesehen, um eine gleichmäßige Führung der Komposit-Folie 100 sicherzustellen.

Als Basisfolie 110 wird eine Aluminiumfolie mit einer Dicke von etwa 0,01 mm herangezogen.

Als Kunststofffolie 120 wird eine Folie aus nicht fettlöslichem, bis etwa 90°C wärmeresistentem Kunststoffmaterial, nämlich aus Polyethylen-Terephthalat (PET) mit einer Dicke von etwa 0,005 mm herangezogen.

Die oben erläuterten Ausführungsbeispiele der Erfindung dienen lediglich dem Zweck eines besseren Verständnisses der durch die Ansprüche vorgegebenen erfindungsgemäßen Lehre, die als solche durch das Ausführungsbeispiel nicht eingeschränkt ist.

### Bezugszeichenliste

- 100: = Komposit-Folie
- 110: = Basisfolie
- 120: = Kunststofffolie
- 210, 220: = Spulenkörper
- 230: = dritter Spulenkörper
- 300: = Verpresseinrichtung
- 310, 320: = Rollen
- 400: = UV-Bestrahlungseinheit
- 410, 420: = elastisch vorgespannte Spannrollen
- 500: = UV-Bestrahlungseinheit
- 510, 520: = elastisch vorgespannte Spannrollen

## Patentansprüche

1. Verfahren zum Herstellen einer aus einer Basisfolie (110) und einer Kunststofffolie (120) zusammengesetzten Komposit-Folie (100), **dadurch gekennzeichnet, dass** die Basisfolie (110) und die Kunststofffolie (120) im Vorfeld einer Zusammenfügung zu einer Komposit-Folie (100) von getrennten Spulenkörpern (210, 220) abgewickelt und einer Verpresseinrichtung (300) zugeführt werden, in der sie mittels mindestens zweier gegeneinander vorgespannter Rollen (310, 320) unter Einfügung eines Klebematerials und unter Aufbringung eines vorgegebenen Druckes zu einer Komposit-Folie (100) zusammengepresst werden, die im Nachgang auf einen dritten Spulenkörper (230) aufgewickelt wird.

2. Verfahren nach Anspruch 1, **dadurch gekennzeichnet, dass** eine Mischeinrichtung vorgesehen ist, um das aus einem Kleber und einem Härter zusammengesetzte Klebematerial zu mischen, wobei sowohl der Kleber als auch der Härter in Form von miteinander in vorgegebenem Verhältnis zu mischenden Kunstharzteilchen vorliegen, die mittels jeweiliger Dosiereinrichtungen entsprechend dem vorgegebenem Mischungsverhältnis dosiert werden.

3. Verfahren nach Anspruch 2, **dadurch gekennzeichnet, dass** eine Heizeinrichtung vorgesehen ist, um die Kunstharzteilchen durch Erhitzen zum Schmelzen zu bringen, wobei im Nachgang dazu die Schmelze der Kunstharzteilchen mittels einer Einbringeinrichtung zwischen Basisfolie (110) und Kunststofffolie (120) eingebracht wird und Basisfolie (110) und Kunststofffolie (120) im Nachgang dazu mittels der Verpresseinrichtung (300) lösungsmittelfrei miteinander verklebt werden.

4. Verfahren nach Anspruch 3, **dadurch gekennzeichnet, dass** ein Erhitzen der Kunstharzteilchen mittels einer UV-Bestrahlungseinheit erfolgt, die eingestellt ist, um die Kunstharzteilchen auf eine Temperatur im Bereich von 50°C bis 90°C zu erhitzen.

5. Verfahren nach Anspruch 3, **dadurch gekennzeichnet, dass** ein Erhitzen der Kunstharzteilchen mittels einer UV-Bestrahlungseinheit erfolgt, die eingestellt ist, um die Kunstharzteilchen auf eine Temperatur von etwa 70°C zu erhitzen.

6. Verfahren nach einem der vorhergehenden Ansprüche, **dadurch gekennzeichnet, dass** die Basisfolie (110) im Vorfeld eines Eingangs in die Verpresseinrichtung (300) eine UV-Bestrahlungseinheit (500) zum Zweck einer Erwärmung durchläuft.

7. Verfahren nach Anspruch 6, **dadurch gekennzeichnet, dass** jeweils vor und hinter der UV-Bestrahlungseinheit (400) der Basisfolie (110) elastisch vorgespannte Spannrollen (510, 520) vorgesehen sind, um eine gleichmäßige Führung der Basisfolie (110) sicherzustellen.

8. Verfahren nach einem der vorhergehenden Ansprüche, **dadurch gekennzeichnet, dass** auch die Kunststofffolie (120) im Vorfeld eines Eingangs in die Verpresseinrichtung (300) eine UV-Bestrahlungseinheit (400) zum Zweck einer Erwärmung durchläuft.

9. Verfahren nach Anspruch 8, **dadurch gekennzeichnet, dass** jeweils vor und hinter der UV-Bestrahlungseinheit (400) der Kunststofffolie (120) elastisch vorgespannte Spannrollen (410, 420) vorgesehen sind, um eine gleichmäßige Führung der Kunststofffolie (120) sicherzustellen.

10. Verfahren nach einem der vorhergehenden Ansprüche, **dadurch gekennzeichnet, dass** die Basisfolie (110) und/oder die Kunststofffolie (120) im Nachgang einer Zusammenpressung zu einer Komposit-Folie (100) mittels jeweiliger auf ihre jeweilige Oberfläche ausgerichteter UV-Bestrahlungseinheiten auf eine vorgegebene Temperatur erhitzt werden, um eine irreversible UV-Licht-induzierte Aushärtung der geschmolzenen Kunstharzteilchen zu bewirken.

11. Verfahren nach Anspruch 10, **dadurch gekennzeichnet, dass** jeweils vor und hinter den UV-Bestrahlungseinheiten der Komposit-Folie (100) mindestens eine elastisch vorgespannte Spannrolle vorgesehen ist, um eine gleichmäßige Führung der Komposit-Folie (100) sicherzustellen.

12. Verfahren nach einem der vorhergehenden Ansprüche, **dadurch gekennzeichnet, dass** als Basisfolie (110) eine Aluminiumfolie herangezogen wird.

13. Verfahren nach einem der vorhergehenden Ansprüche, **dadurch gekennzeichnet, dass** als Basisfolie (110) eine Folie mit einer Dicke im Bereich von 0,001 mm bis 0,02 mm herangezogen wird.

14. Verfahren nach einem der vorhergehenden Ansprüche, **dadurch gekennzeichnet, dass** als Basisfolie (110) eine Folie mit einer Dicke im Bereich von 0,003 mm bis 0,016 mm herangezogen wird.

15. Verfahren nach einem der vorhergehenden Ansprüche, **dadurch gekennzeichnet, dass** als Basisfolie (110) eine Folie mit einer Dicke von etwa 0,01 mm herangezogen wird.
